# EUROPEAN PATENT SPECIFICATION

(11) **EP 2 099 180 B1**
(45) Date of publication and mention of the grant of the patent: **23.02.2011**
(21) Application number: 09154118.5
(22) Date of filing: 02.03.2009
(51) Int. Cl.: H04L 12/56

(54) **Switching device and method for Layer-2 forwarding of OAM frames with multicast Layer-3 addresses**
Schaltungsvorrichtung und Methode für das Weiterleiten, auf Schicht 2, von OAM-Datenframes mit Multicastadressen auf Schicht 3
Commutateur réseau et méthode pour expédier, à la couche 2, des trames OAM ayant des adresses de couche 3 multicast

(30) Priority: 05.03.2008 JP 2008054240
(43) Date of publication of application: 09.09.2009
(73) Proprietor: NEC Corporation, Minato-ku Tokyo 108-8001 (JP)
(72) Inventor: Sakurai, Akira, Tokyo (JP)
(74) Representative: Betten & Resch

(56) References cited:
- EP-A- 1 770 904
- WO-A-2007/077923
- JP-A- 2006 087 014
- US-A1- 2005 099 949
- US-A1- 2005 108 401
- US-B1- 6 847 638

## Description

This application is based upon and claims the benefit of priority from Japanese Patent Application No. 2008-054240, filed on March 5, 2008.

The present invention generally relates to a communication device and an operation management method used in the communication device and particularly relates to an operation management method concerned with a multicast topology at Layer 2.

Frame Relay, Asynchronous Transfer Mode (ATM), Internet Protocol Virtual Private Network (IP-VPN), and others have been used as network technologies for providing data communications services. At present, full proliferation of Layer-2 Virtual Private Network (L2-VPN) services realized by Ethernet^{™} technologies, or wide-area Ethernet^{™} services, has begun with a trend to higher speed, lower equipment costs, and the like as a backdrop.

Moreover, standardization organizations such as Institute of Electrical and Electronics Engineers, Inc. (IEEE) and International Telecommunication Union Telecommunication Standardization Sector (ITU-T) have been proceeding the establishment of operations, Administration and Maintenance (OAM) protocols, the application of which is expected to enhance the reliability of Layer-2 networks and to reduce operation costs.

For example, according to ITU-T Y.1731 (OAM functions and mechanisms for Etherne^{™} based networks) and IEEE 802.lag (Connectivity Fault Management), Loop-back test makes it possible to check connectivity on an arbitrary segment within an Ethernet^{™} network, and Link Trace test makes it possible to retrieve a route for forwarding.

However, these OAM tools are premised on point-to-point uses or uses on those segments that are statically set in a broadcast domain, and are not assumed to be used on dynamically varying segments.

On the other hand, in a multicast network, to reduce the load on a delivery router, to use the bandwidth of a link more efficiently, and to ensure the confidentiality of data, dynamic formation of a topology varying with the delivery group is generally performed using a multicast routing protocol.

For example, a Layer-2 switch has a function of passing multicast data on only to one or more appropriate port, with a forwarding table dynamically constructed on a multicast-delivery-group basis by utilizing a snooping functions, which is a function of looking into a packet of a multicast routing protocol, such as Internet Group Management Protocol (IGMP) or Multicast Listener Discovery (MLD), exchanged between an IP router and a terminal (see, for example, Japanese Patent Application Unexamined Publication No. 2006-087014).

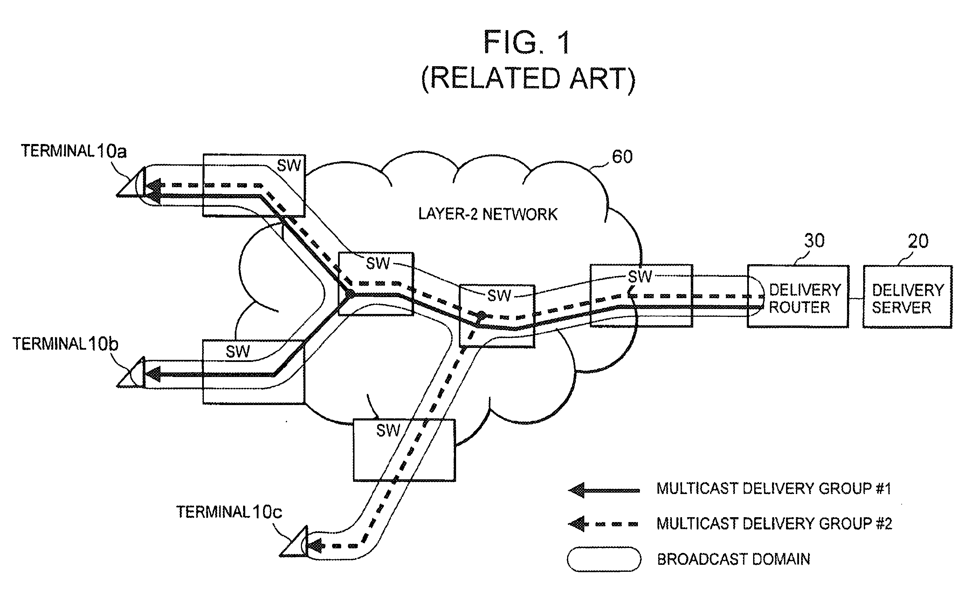

Therefore, a multicast network has the characteristic that network, topologies at Layer 2 dynamically vary with delivery groups, depending on the states of participation by terminals in each multicast delivery group. Accordingly, in the case where, as shown in FIG. 1, a plurality of multicast traffics on topologies varying from delivery group to delivery group (multicast delivery groups #1 and #2) are handled in a Layer-2 network 60, an OAM functions is required that can dynamically identify a topology as described above.

Particularly in the case where multicast deliveries are made over a Layer-2 network implemented by Ethernet^{™} technologies, Layers-2 switches in the network use the snooping function in order to reduce the load on a delivery router, to use a link bandwidth more efficiently, and to ensure the confidentiality of data. The snooping function is a functions of looking into a multicast routing packet exchanged between an IP router and a terminal and determining a forwarding destination (see RFC 4541, Considerations for Internet Group Management Protocol and Multicast Listener Discovery Snooping Switches).

In this case, a forwarding topology in the Layer-2 network dynamically varies with the delivery group, depending on the states of participation by terminals in each multicast delivery group. Therefore, in operations and management, required are a functions of checking connectivity and a function of retrieving a route, on the basis of a function of identifying such a network topology.

However, the OAM function at Layer 2, which are premised on maintenance and operations on point-to-point communications or on statically set segments in a broadcast domain, do not have a method for dealing with such network topologies and therefore cannot perform appropriate operation management in a multicast network. Moreover, the forwarding destination of an OAM frame cannot be controlled with the technologies described in Japanese Patent Application Unexamined Publication No. 2006-087014 and RFC 4541. Therefore, similarly, appropriate operation management cannot be performed in a multicast network.

EP 1971086 A aims at preventing, in using a multicast DA in an OAM frame, an increase in the network bandwidth usage and in the load of node processing and a degradation of the network reliability caused by a frame being transmitted to all routes in a broadcast domain. It discloses that a MAC address and other basic frame information and the MEGID (management entity group identifier) are associated with each other, and the MEGID information is added to the OAM frame, and these information are transmitted from an edge node serving as an end point of an ME. In a relay node of the ME, a route control table used for OAM frame control is provided, and a filter is generated by snooping of the OAM frame. Furthermore, when the relay node does not support the OAM function, the MEGID is denoted by a VLAN tag and the route control is made using the snooping function of each VLAN tag.

US 2005/099949 A discloses to define Ethernet OAM domains by defining reference points on the Ethernet network and using the reference points to insert and extract Ethernet OAM flows. The reference points may be network elements at the edge of a provider's domain, customer elements, or network elements configured to perform OAM flow handoffs between domains. By defining OAM multicast addresses and OAM flow identifiers, and allowing the reference points to be addressed by the multicast address and filtering to be performed by the reference points based on the OAM flow identifiers, OAM flows may be defined on the network. For example, customer-customer OAM flows may be defined, intra-provider and inter-provider OAM flows may be defined, and various segment OAM flows may be defined. An OAM frame format is provided to enable the OAM flows to be carried in a conventional Ethernet network.

Accordingly, an object of the present invention is to provide a communication device and an operation management method used in the communication device that can solve the above-described problems and that can check connectivity along an appropriate route and can retrieve a route even in a case where different network topologies are structured for different multicast groups.

According to the present invention, a communication device includes: a communication section for receiving or transmitting an Operation Administration and Maintenance (OAM) frame from or to a Layer-2 network; and a controller for providing a destination Media Access Control (MAC) address to the OAM frame when the OAM frame is transmitted in the Layer-2 network, wherein the destination MAC address is associated with an Internet Protocol (IP) multicast address.

According to the present invention, an operation management method in a communication device includes: providing a destination Media Access Control (MAC) address to an Operation Administration and Maintenance (OAM) frame to be transmitted, wherein the destination MAC address is associated with an Internet Protocol (IP) multicast address; and transmitting the OAM frame to the Layer-2 network.

The present invention is configured and operates as described above. Thereby, the effect can be obtained that it is possible to check connectivity along an appropriate route and to retrieve a route even in a case where different network topologies are structured for different multicast groups.
FIG. 1 is a diagram showing a network on which different multicast delivery groups are formed.
FIG. 2 is a block diagram showing a configuration of a switch device according to an exemplary embodiment of the present invention.
FIG. 3 is a block diagram showing a network structure according to the exemplary embodiment of the present invention.
FIG. 4 is a diagram showing a frame format of an OAM frame used in the exemplary embodiment of the present invention.
FIG. 5 is a diagram showing a network for describing operations in the network according to the exemplary embodiment of the present invention.
FIG. 6 is a diagram showing a sequence of table construction operations in the network according to the exemplary embodiment of the present invention.
FIG. 7 is a sequence chart showing a sequence of loop-back test operations in the network according to the exemplary embodiment of the present invention.
FIG. 8 is a sequence chart showing a sequence of link trace test operations in the network according to the exemplary embodiment of the present invention.

According to an exemplary embodiment of the present invention, in a Layer-2 network where different network topologies are structured for different multicast groups, a function of checking connectivity and a function of retrieving a route are provided.

Specifically, a communication device (here, a switch device) according to the present exemplary embodiment transmits an Operation, Administration and Maintenance (OAM) frame in a Layer-2 network, the OAM frame including a destination Media Access Control (MAC) address associated with an Internet Protocol (IP) multicast address.

More specifically, the communication device previously constructs a multicast forwarding table by snooping multicast routing packets and, by referring to the multicast forwarding table, determines the content of processing and a forwarding destination of a received OAM frame including required multicast group information.

Accordingly, even when a forwarding route varies with the multicast group in the Layer-2 network, an appropriate output port can be determined for each OAM frame, so that it is possible to check connectivity and to retrieve a route.

Hereinafter, an example of the exemplary embodiment of the present invention will be described with reference to the drawings.

### 1. Communication device

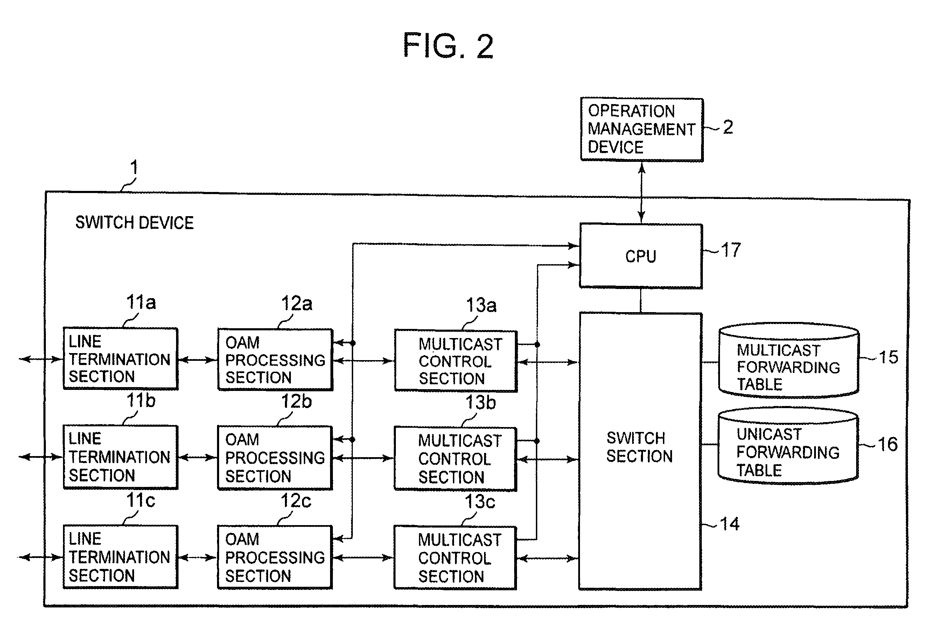

Preferring to FIG. 2, a switch device 1 is connected to an operation management device 2. The switch device 1 includes line termination sections 11a to 11c each accommodating a terminal or neighboring switch, OAM processing sections 12a to 12c, multicast control sections 13a to 13c, a switch section 14, a multicast forwarding table 15, a unicast forwarding table 16, and a Central Processing Unit (CPU) 17. In this figure, although the switch device 1 has three ports as an example, the number of ports is not restricted to three. The switch device 1 may be provided with two or more ports.

Each of the line termination sections 11a to 11c is connected to a terminal or neighboring switch through optical fiber, twisted pair cable, or the like and is a block which implements functions at Layer-1 and Layer-2, such as optical/electrical conversion, frame synchronisation, and error correcting control. The line termination sections 11a to 11c are constructed of physical (PHY) devices or MAC devices in conformity with the Ethernet^{™} standards.

Each of the OAM processing sections 12a to 12c is a block which performs generating, relaying, or terminating of an OAM frame at Layer 2, which will be described later. The OAM processing sections 12a to 12c may be implemented by hardware circuits or software processing performed with the CPU 17.

Each of the multicast control sections 13a to 13c is a block which, when a multicast routing protocol packet is periodically exchanged between a terminal and a delivery router, duplicates the multicast routing protocol packet for extraction, and transfers the duplicated packet to the CPU 17. This extraction processing is performed by referring to the protocol type field in the IP header and can be easily implemented by a hardware circuit. The CPU 17 updates the multicast forwarding table 15 based on the information in this duplicated packet.

The switch section 14 is a packet switch that forwards a. frame received from any one of the line termination sections 11a to 11c to an appropriate one of the line termination sections 11a to 11c and is structured generally by a combination of a hardware circuit and a buffer memory. This switch sections 14 determines an output port for a received frame by referring to the unicast forwarding table 16 when the destination MAC address of the received frame is a unicast address, but by referring to the multicast forwarding table 15 when the destination MAC address of the received frame is a. multicast address.

The CPU 17 controls the operations of the switch device 1 including OAM-related operations as described later under control of the operation management device 2. Further, the CPU 17, the multicast control sections 13a to 13c, and the OAM processing sections 12a to 12c may be implemented by a program-controlled processor on which computer programs run.

As described above, in the switch device 1 included in a Layer-2 network, a multicast routing packet received at any one of ports (link termination sections) 11a to 11c is duplicated by a corresponding one of multicast control sections 13a to 13c and then transferred to the CPU 17. The CPU 17 identifies the forwarding destination of a multicast packet based on the information in this packet and updates the multicast forwarding table 15.

When the switch device 1 has received an OAM frame, any one of the OAM processing sections 12a to 12c performs relay processing, including loopback of the frame and rewriting of the contents of the frame for each multicast group, by referring to the multicast forwarding table 15 via the CPU 17. Moreover, when the switch device 1 transparently transmits an OAM frame, a switch section 14 determines an output port for the frame by referring to the multicast forwarding table 15 as in the case of a user frame.

As described above, according to the present invention, even in a case where a route for forwarding varies with the multicast group in a Layer-2 network, an appropriate output port can be determined for an OAM frame, so that it is possible to check connectivity and to retrieve a route for forwarding.

In other words, the present invention provides a function of checking connectivity and a function of retrieving a route for forwarding in a case where different network topologies are structured for different multicast groups in a Layer-2 network over which Internet Protocol (IP) multicast traffic is transmitted by using, for example, Ethernet^{™} technologies.

### 2. Network structure

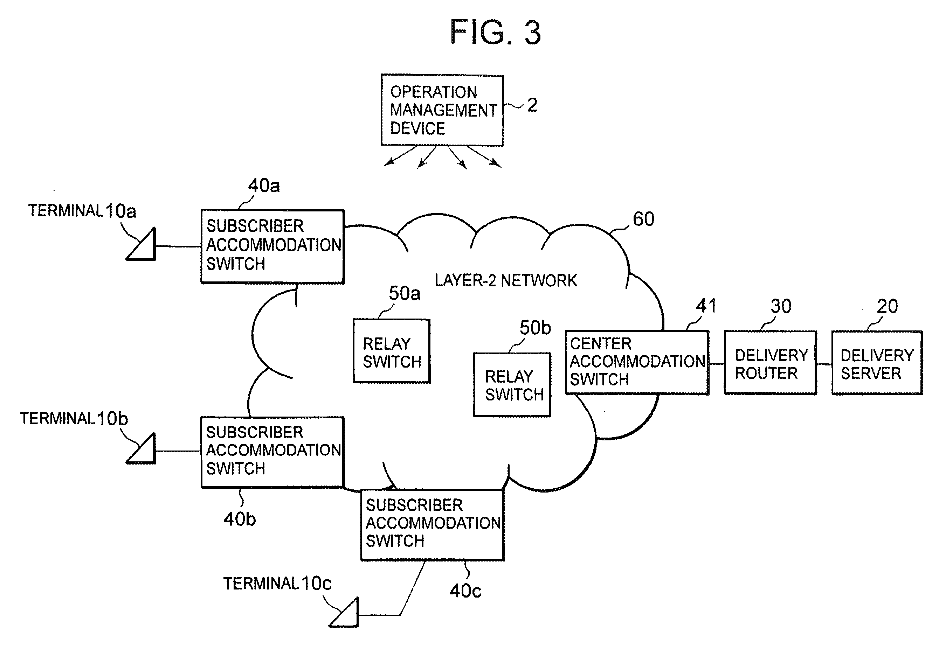

Referring to FIG. 3, it is assumed that a multicast delivery network includes the operation management device 2, subscriber terminals 10a-10c, delivery server 20, delivery router 30 and a Layer-2 network. 60 including switch devices according to the present exemplary embodiment of the present invention. Each of the terminals 10a to 11c is provided with a function of receiving multicast traffic. The delivery server 20 delivers multicast traffic by IP multicast.

In the Layer-2 network 60, for simplicity, it is assumed that subscriber accommodation switches 40a to 40c are connected to a center accommodation switch 41 through a plurality of relay switches 50a and 50b. The subscriber accommodation switches 40a to 40c accommodate the terminals 10a to 10c respectively, and the center accommodation switch 41. accommodates the delivery routed 30. The operation management device 2 operates and manages the subscriber accommodation switches 40a to 40c, the center accommodation switch 41, and the relay switches 50a and 50b in the Layer-2 network 60.

The structure of physical links providing the connections between each of the subscriber accommodation switches 40a to 40c, center accommodation switch 41, and relay switches 50a and 50b is of little concern in the present exemplary embodiment. Accordingly, any topology such as hub-and-spoke topology or mesh topology can be applied to the physical topology of the Layer-2 network 60. Incidentally, each of the subscriber accommodation switches 40a to 40c, center accommodation switch 41, and relay switches 50a and 50b is configured similarly to the above-described switch device 1.

In the present exemplary embodiment, it is assumed that multicast communication is performed on the premise that routing information is dynamically exchanged between the delivery router 30 and each of the terminals 10a to 10c. For the multicast routing protocol used for this communication, IPv4 Internet Group Management Protocol (IGMP) (see RFC 1112 and others) or IPv6 Multicast Listener Discovery (MLD) (see RFC 2719 and others) is typically used. However, the present invention is not limited to the use of these protocols.

### 3. OAM frame format

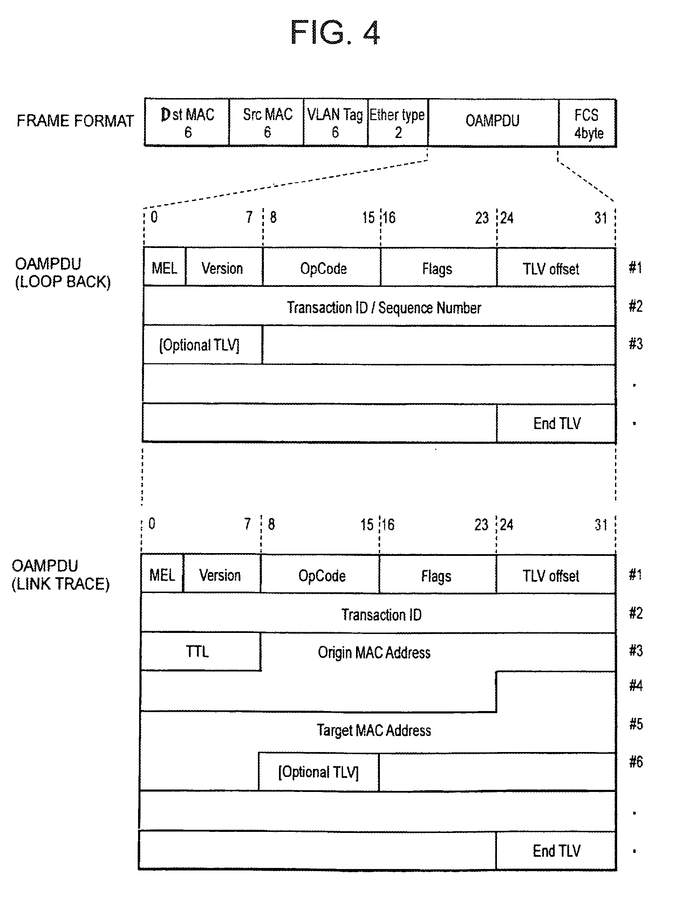

Referring to FIG. 4, an OAM frame format which is used in the present exemplary embodiment is obtained by extending the destination MAC address field and OAM Protocol Data Unit (OAMPDU) field of an ordinary Layer-2 OAM frame.

In the loop-back test prescribed by IEEE 802.lag, the reserved multicast address of a fixed value (or a unicast address value) is used as the destination MAC address.

However, according to the present exemplary embodiment, a multicast address value varying with the delivery group can be used in this field. Specifically, it is assumed that, with the application of a mapping scheme of IP multicast address and MAC address (see RFC 1112 and RFC 1972), a destination MAC address value equivalent to that of a user multicast frame is used. In the case of an IPv4 packet, "01-00-5e-**-**-**" is used as the destination MAC address.

In Link Trace test prescribed by IEEE 802.1ag, similarly, the reserved multicast address of a fixed value (or a unicast address value) is used as the destination MAC address, and a destination unicast address, which is the search target, is used in the OAMPDU field.

However, according to the present exemplary embodiment, a multicast address value varying with the delivery group can be used in these fields (the destination MAC address field and the OAMPDU field). More specifically, a multicast MAC address is used in the destination MAC address field. A multicast MAC address is used as the Target MAC address in the OAMPDU field for Link Trace. Incidentally, the VLAN (Virtual Local Area Network) tag shown in FIG. 3 may be any one of C-Tag, S-Tag, B-Tag, and the like prescribed by IEEE 802.Q, IEEE 802.1ad, and IEEE 802.1ah. Additionally, according to the present invention, these VLAN tags may be used in combination in a stacked multistage form.

### 4. Operation management

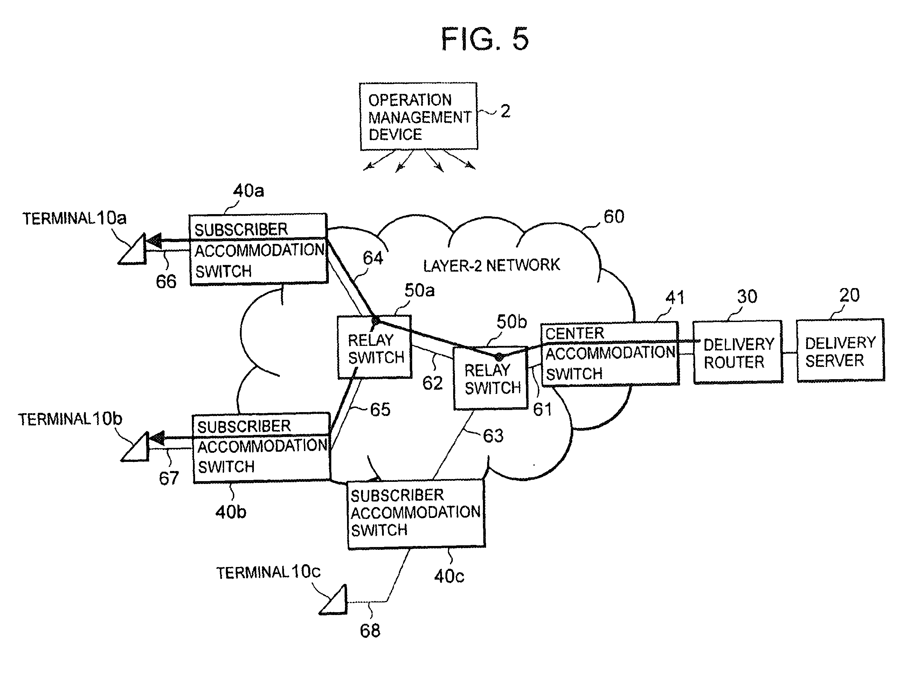

Assuming that the subscriber terminals 10a and 10b participate in a multicast group, the operation management according to the present exemplary embodiment will be described with reference to FIGS. 2 and 5-8.

Note that, in the present exemplary embodiment, it is assumed that the OAM processing sections 12a to 12c of each of the subscriber accommodation switches 40a to 40c, center accommodation switch 41, and relay switches 50a and 50b are set in advance such that the center accommodation switch 41 and subscriber accommodation switches 40a to 40c serve as termination points which terminate an OAM frame, and that the relay switches 50a and 50b serve as relaying points which relay OAM frames.

### 4.1) Construction of Multicast forwarding table

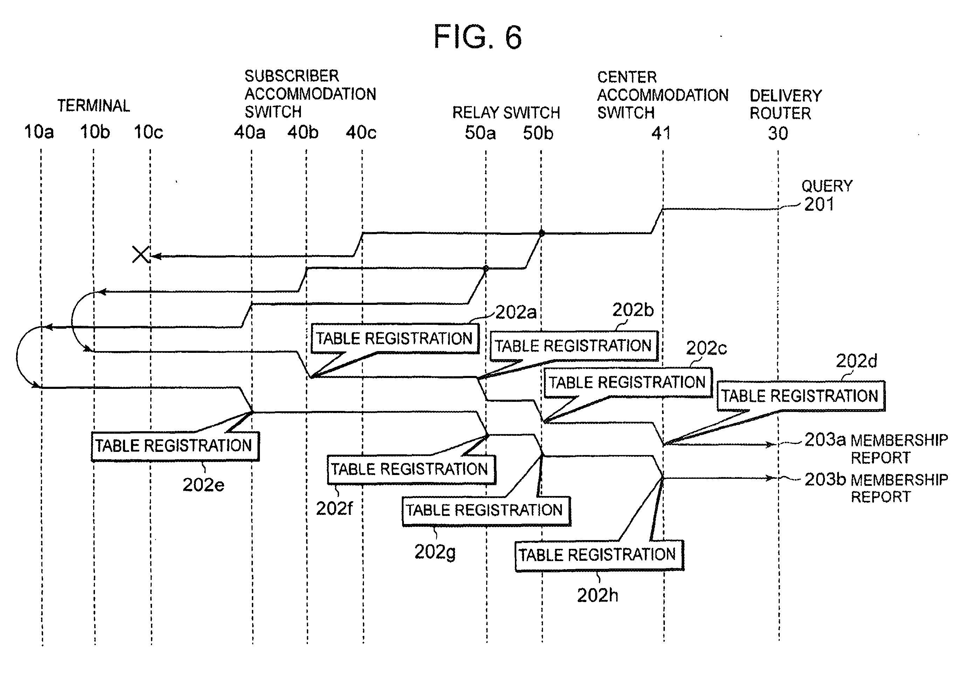

Referring to FIG. 6, a description will be given of a sequence of operations in which the multicast forwarding table 15 is constructed in the subscriber accommodation switches 40a to 40c, center accommodation switch 41, and relay switches 50a and 50b in the Layer-2 network 60.

The delivery router 30 periodically inquires of every one of the terminals 10a to 10c, through transmission of a query packet, whether or not it will participate in a multicast group in question (step 201 in FIG. 6). In response to this query, each of those terminals that will participate in the group (here, the terminals 10a and 10b) transmits a group membership report packet to the delivery router 30 (steps 203a and 203b in FIG. 6).

In this event, in each of the subscriber accommodation switches 40a and 40b that have received this group membership report packet through links 66 and 67, respectively, the packet is duplicated by a corresponding one of the multicast control sections 13a to 13c, and packet analysis is performed by the CPU 17. From the result of this analysis, each of the subscriber accommodation switches 40a and 40b knows that there is a terminal that will participate in the group in the direction of the link 66 or 67, and then registers the group address into the multicast forwarding table 15 (steps 202a and 202 in FIG. 6).

Each of the relay switches 50a and 50b and center accommodation switch 41 similarly knows that there is a terminal (or terminals) that will participate in the group in the direction of a link 61, 62, 64, or 65, and then registers the group address (steps 202b to 202d and steps 202f to 202h in FIG. 6) .

On the other hand, the subscriber accommodation switch 40c that receives no response from the terminal 10c does not perform registration of the group address in the direction of a link 68. Similarly, the relay switch 50b does not perform registration of the group address in the direction of a link 63 .

In this manner, the multicast forwarding table 15 is dynamically constructed with respect to the multicast group address in question in each of the subscribe accommodation switches 40a to 40c, center accommodation switch 41, and relay switches 50a and 50b in the Layer-2 network 60.

### 4.2) Loop-back test

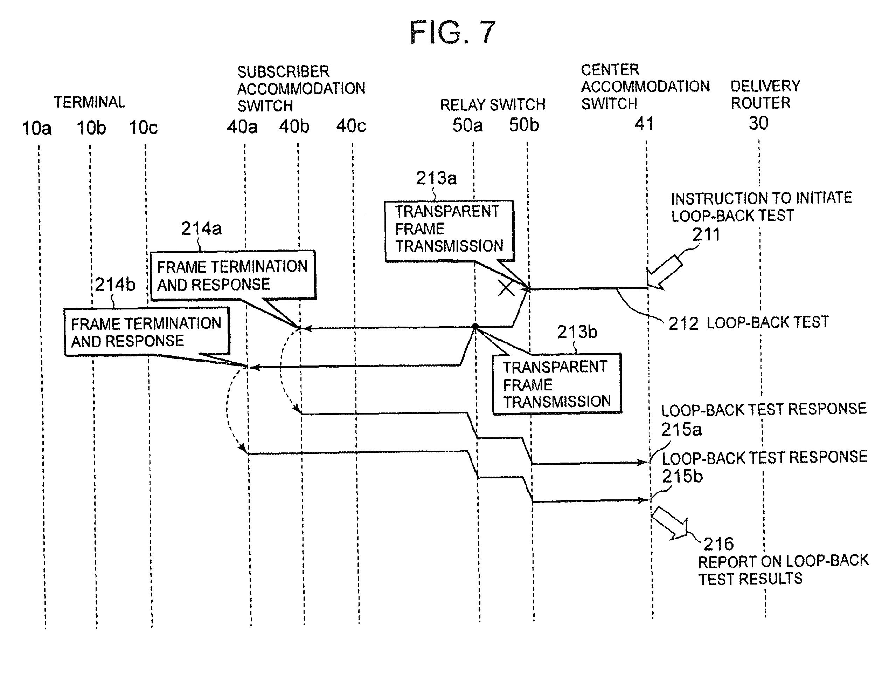

Next, with reference to FIG. 7, a description will be given of a case where a loop-back test is performed in the state where the multicast forwarding tables 15 have been dynamically constructed through the above-described procedure.

The operation management device 2 instruct the center accommodation switch 41 to initiate a loop-back test for the group in question (step 211 in FIG. 7). The OAM processing section (12a, 12b or 12c) of the center accommodation switch 41 sends out a loop-back test frame in which the multicast group address is given to the destination MAC address (step 212 in FIG. 7).

In the relay switch 50b, a corresponding one of the OAM processing section 12a to 12c transparently transfers this OAM frame to the switch section 14. The switch section 14, referring to the multicast forwarding table 15, forwards the OAM frame only toward the link 62 (step 213a in FIG. 7).

Moreover, in the relay switch 50a, a corresponding one of the CAM processing sections 12a to 12c transparently transfers this OAM frame to the switch section 14 . The switch section 14, referring to the multicast forwarding table 15, forwards the OAM frame toward each of the links 64 and 65 (step 213b in FIG. 7) .

In each of the subscriber accommodation switches 40a and 40b, a corresponding one of the OAM processing sections 12a to 12c transfers the received OAM frame to the CPU 17, which then searches the multicast forwarding table 15. Here, if the multicast group in question is registered in the multicast forwarding table 15, the CPU 17 generates a loop-back test response frame in which the MAC address (unicast address) of the center accommodation switch 41 is set as the destination MAC address thereof and the loop-back test response frame is sent back to the center accommodation switch 41 (steps 214a, 214b, 215a, and 215b in FIG. 7).

The center accommodation switch 41 collects the results of this loop-back test by receipts of the loop-back test response frames and transmits a report on these results to the operation management device 2 (step 216 in FIG. 7).

According to the present exemplary embodiment, through the above-described procedure, it is possible to check the connectivity to every one of the germination points for each multicast delivery group.

### 43) Link trace test

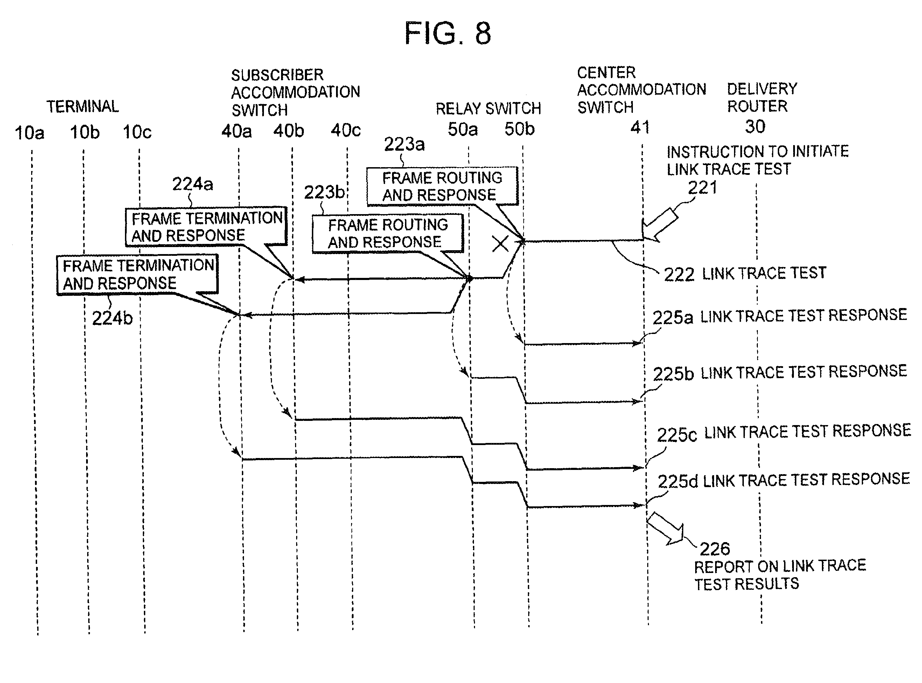

Next, with reference to FIG. 8, a description will be given of a case where a link trance test is performed in the state where the multicast forwarding tables 15 have been dynamically constructed through the above-described procedure.

The operation management device 2 instructs the center accommodation switch 41 to initiate a link trace test for the multicast group in question (step 221 in FIG. 8). An appropriate one of the OAM processing sections 12a to 12c of the center accommodation switch 41 sends out a link trace test frame in which the multicast group address is given in its OAMPDU field as shown in FIG. 4 (step 222 in FIG. 8).

In the relay switch 50b, a corresponding one of the OAM processing sections 12a to 12c transfers this received OAM frame to the CPU 17, which then searches the multicast forwarding table 15. Here, the relay switch 50b forwards the OAM frame whose TTL (Time To Live) field is decremented toward the link 62 for which the multicast group in question is registered (step 223a in FIG. 8). At the same time, the relay switch 50b sends back a link trace test response frame to the center accommodation switch 41, the link trace test response frame having its destination MAC address set to the MAC address (unicast address) of the center accommodation switch 41 (step 225a in FIG. 8).

Moreover, in the relay switch 50a, a corresponding one of the OAM processing sections 12a to 12c transfers the received OAM frame to the CPU 17, which then searches the multicast forwarding table 15. The relay switch 50a forwards the OAM frame in which its TTL field is decremented toward each of the links 64 and 65 for which the multicast group in question is registered (step 223b in FIG. 8) and, at the same time, sends back a link trace test response frame (step 225b in FIG. 8).

In each of the subscriber accommodation switches 40a and 40b, a corresponding one of the OAM processing sections 12a to 12c transfers the received OAM frame to the CPU 17, which then searches the multicast forwarding table 15. Here, if the Multicast group in question is registered in the multicast forwarding table 15 , a link trace test response frame is sent back (steps 224a, 224b, 225c, and 225d in FIG. 8).

The center accommodation switch 41 collects the results of this link trace test by receipts of the link trace test response frames and transmits a report on these results to the operation management device 2 (step 226 in FIG. 8).

### 5. Advantage

As described above, according to the present exemplary embodiment, it is possible to retrieve forwarding routes for each multicast delivery group. Accordingly, it is possible to keep track of a current network topology for each multicast delivery group even when the network topology varies.

In the case where the loop-back test is performed, according to the present exemplary embodiment, the same destination MAC address as in a user multicast frame is used in a loop-back test frame, whereby each of the subscriber accommodation switches 40a to 40c, center accommodation switch 41, and relay switches 50a and 50b in the Layer-2 network 60 can refer to this field value. Thus, it is possible to check connectivity by forwarding the loop-back test frame along the same Layer-2 routes as the user frames for this multicast group follow.

In the case where the link trace test is performed, according to the present exemplary embodiment, the same MAC address as in a user multicast frame is used in the OAMPDU field of a link trace test frame, whereby, similarly, it is possible to retrieve the same Layer-2 routes as the user frames for this Multicast group follow.

Thus, according to the present exemplary embodiment, even in a case where different topologies are structured for different multicast groups, it is possible to check connectivity along an appropriate route and to retrieve a route.

The above-described processing of terminating, routing, and transparently transmitting an OAM frame can be easily implemented without adding any new resources such as a table memory, because used for reference is the multicast forwarding table 15 which is constructed by using the snooping function according to a technology related to the present invention, composed of multicast forwarding destination that are the same as those used in user multicast frames. Therefore, the present exemplary embodiment has the effect that scalability is not affected even when an increase occurs in the number of accommodation ports and/or the number of entries.

Moreover, the extension applied to the format shows in FIG. 4 is minor one and therefore can be easily implemented. Additionally, even if a Layer-2 switch that does not incorporate the configuration according to the present exemplary embodiment is present in the Layer-2 network 60, it is possible to transparently transmit a frame appropriately. Accordingly, high compatibility with existing networks can be accomplished.

Further, according to the present exemplary embodiment, there is another effect that easy implementation can be accomplished without exerting influence on the delivery server 20, delivery router 30, terminals 10a to 10c, and other Layer-3 devices.

Furthermore, the center accommodation switch 41 also can be configured to periodically initiate the loop-back test shown at steps 212 to 215 in FIG. 7 in such a manner that a loop-back test is autonomously initiated upon detection of the query packet shown at step 201 in FIG. 6. The ID of a multicast delivery group used in the network is determined between Layer-3 devices (the delivery server 20, delivery router 30, and terminals 10a to 10c), Therefore, if the operation and management of this delivery group is performed in the Layer-2 network 60, it is necessary to specify the group ID to each Layer-2 switch individually. However, the complexity of the maintenance and operation can be reduced by automatically initiating the test as described above.

The present invention can be applied to a Layer-2 network over which IP multicast traffic is transmitted through switches by using Ethernet™ technologies, as well as to a communication device such as a Layer-2 switch for implementing the Layer-2 network.

The present invention may be embodied in other specific forms without departing from the essential characteristics thereof. The above-described exemplary embodiment is therefore to be considered in all respects as illustrative and not restrictive, the scope of the invention being indicated by the appended claims rather than by the foregoing description, and all changes which come within the meaning and range of equivalency of the claims are therefore intended to be embraced therein.
An example 1 is a communication device comprising:
   a communication section for receiving or transmitting an Operation Administration and Maintenance (OAM) frame from or to a Layer-2 network; and
   a controller for providing a destination Media Access Control (MAC) address to the OAM frame when the OAM frame is transmitted in the Layer-2 network, wherein the destination MAC address is associated with an Internet Protocol (IP) Multicast address.
An example 2 is a communication device according to example 1, further comprising:
   a multicast forwarding table which is constructed based on results of snooping Layer-3 routing packets,
   wherein, when the communication device functions as a relay point for a received OAM frame, the controller determines a forwarding destination of the received OAM frame to be transparently transmitted by referring to the multicast forwarding table and, when the communication device functions as a termination point for the received OAM frame, the controller determiners whether the received OAM frame is to be sent back.
An example 3 is a communication device according to example 2, wherein, when the communication device functions as a relay point for the received OAM frame, the controller processes the received OAM frame and determines a forwarding destination of the received OAM frame processed by referring to the Multicast forwarding table and, when the communication device functions as a termination point for the received OAM frame, the controller determines whether the received OAM frame is to be sent back.
An example 4 is a communication device according to example 1, further comprising:
   a multicast forwarding table which is constructed based on results of snooping Layer-3 routing packets,
   wherein, when the communication device functions as a relay point for the received OAM frame, the controller processes the received OAM frame and determines a forwarding destination af the received Frame processed by referring to the multicast forwarding table and, when the communication device functions as a termination point for the received OAM frame, the controller determines whether the received OAM frame is to be sent back.
An example 5 is a communication device according to example 1, wherein the controller autonomously initiates a Layer-2 loopback test when receiving a multicast routing packet which is periodically exchange between a router and a terminal.
An example 6 is an operation management method in a communication device comprising:
   providing a destination Media Access Control (MAC) address to an Operation Administration and Maintenance (OAM) frame to be transmitted, wherein the destination MAC address is associated with an Internet Protocol (IP) multicast address; and
   transmitting the OAM frame to the Layer-2 network.
An example 7 is an operation management method according to example 6, further comprising:
   constructing a multicast forwarding table based on results of snooping Layer-3 routing packets;
   when the communication device functions as a relay point for a received OAM frame, determining a forwarding destination of the received OAM frame to be transparently transmitted by referring to the multicast forwarding table; and
      when the communication device functions as a termination point for the received OAM frame, determining whether the received OAM frame is to be sent back.
An example 8 is an operation management method according to example 7, further comprising:
   when the communication device functions as a relay point for the received OAM frame, processing the received OAM frame and determining a forwarding destination of the received OAM frame processed by referring to the multicast forwarding table; and
   when the communication device functions as a termination point for the received OAM frame, determining whether the received OAM frame is to be sent back.
An example 9 is an operation management method according to example 6, further comprising:
   constructing a multicast forwarding table based on results of snooping Layer-3 routing packets;
   when the communication device functions as a relay point for the received OAM frame, processing the received OAM frame and determining a forwarding destination of the received OAM frame processed by referring to the multicast forwarding table; and
   when the communication device functions as a termination point for the received OAM frame, determining whether the received OAM frame is to be sent back.
An example 10 is an operation management method according to example 6, further comprising:
   autonomously initiating a Layer-2 loopback test when receiving a multicast routing packet which is periodically exchanged between a router and a terminal.
An example 11 is a system including a plurality of switch devices of a Layer-2 network, each of the switch devices comprising:
   a communication section for receiving or transmitting an Operations Administration and Maintenance (OAM) frame from or to a Layer-2 network; and
   a controller for providing a destination Media Access Control (MAC) address to the OAM frame when the OAM frame is transmitted in the Layer-2 network, wherein the destination MAC address is associated with an Internet Protocol (IP) multicast address.
An example 11 is a system according to example 11, wherein the switch device further comprises:
   a multicast forwarding table which is constructed based on results of snooping Layer-3 routing packets,
   wherein, when the switch device functions as a relay point for a received OAM frame, the controller determines a forwarding destination of the received OAM frame to be transparently transmitted by referring to the multicast forwarding table and, when the switch device functions as a termination point for the received OAM frame, the controller determines whether the received OAM frame is to be sent back.
An example 13 is a system according to example 12, wherein, when the switch device functions as a relay point for the received OAM frame, the controller processes the received OAM frame and determines a forwarding destination of the received OAM frame processed by referring to the multicast forwarding table and, when the switch device functions as a termination point for the received OAM frame, the controller determines whether the received OAM frame is to be sent back.
An example 14 is a system according to example 11, wherein the switch device further comprises:
   a multicast forwarding table which is constructed based on results of snooping Layer-3 routing packets,
   wherein, when the switch device functions as a relay point for the received OAM frame, the controller processes the received OAM frame and determines a forwarding destination of the received OAM frame processed by referring to the multicast forwarding table and, when the switch device functions as a termination point for the received OAM frame, the controller determines whether the received OAM frame is to be sent back.
An example 15 is a system according to example 11, wherein the controller autonomously initiates a Layer-2 loopback test when receiving a multicast routing packet which is periodically exchanged between a router and a terminal. An example 16 is a computer program instructing a computer of a communication device to perform operation management, comprising:
   providing a destination Media Access Control (MAC) address to an Operation Administration and Maintenance (OAM) frame to be transmitted, wherein the destination MAC address is associated with an Internet Protocol (IP) multicast address; and
   transmitting the OAM frame to the Layer-2 network.
An example 17 is a computer program according to example 16, further comprising:
   constructing a multicast forwarding table based on results of snooping Layer-3 routing packets;
   when the communication device functions as a relay point for a received OAM frame, determining a forwarding destination of the received OAM frame to be transparently transmitted by referring to the multicast forwarding table; and
   when the communication device functions as a termination point for the received OAM frame, determining whether the received OAM frame is to be sent back.
An example 18 is a computer program according to example 17, further comprising:
   when the communication device functions as a relay point for the received OAM frame, processing the received OAM frame and determining a forwarding destination of the received OAM frame processed by referring to the multicast forwarding table; and
   when the communication device functions as a termination point for the received OAM frame, determining whether the received OAM frame is to be sent back.
An example 19 is a computer program according to example 16, further comprising:
   constructing a multicast forwarding table based on results of snooping Layer-3 rooting packets;
   when the communication device functions as a relay point for the received OAM frame, professing the received OAM frame and determining a forwarding destination of the received OAM frame processed by referring to the multicast forwarding table; and
   when the communication device functions as a termination point for the received OAM frame, determining whether the received OAM frame is to be sent back.
An example 20 is a computer program according to example 16, further comprising:
   autonomously initiating a Layer-2 loopback test when receiving a multicast routing packet which is periodically exchanged between a router and a terminal.

## Claims

1. A communication device (1) comprising;
a communication section (11a-11c) for receiving or transmitting an Operation Administration and Maintenance frame from or to a Layer-2 network (60); and
**characterized by**:
a controller (12a-12c, 13a-13c, 17) for providing a destination Media Access Control address into which an Internet Protocol multicast address is mapped, to the OAM frame by extending a frame format of the OAM frame when the OAM frame is transmitted in the Layer-2 network.

2. The communication device according to claim 1, further comprising:
a multicast forwarding table (15) which is constructed based on results of snooping Layer-3 routing packets,
wherein, when the communication device functions as a relay point (50a, 50b) for a received OAM frame, the controller is adapted to determine a forwarding destination of the received OAM frame to be transparently transmitted by referring to the multicast forwarding table (15) and, when the communication device functions as a termination point (40a-40c) for the received OAM frame, the controller is adapted to determine whether the received OAM frame is to be sent back.

3. The communication device according to claim 2, wherein, when the communication device functions as a relay point (50a, 50b) for the received OAM frame, the controller is adapted to process the received OAM frame and to determine a forwarding destination of the received OAM frame processed by referring to the multicast forwarding table (15) and, when the communication device functions as a termination point (40a-40c) for the received OAM frame, the controller is adapted to determine whether the received OAM frame is to be sent back.

4. The communication device according to claim 1, further comprising:
a multicast forwarding table (15) which is constructed based on results of snooping Layer-3 routing packets,
wherein, when the communication device functions as a relay point (50a, 50b) for the received OAM frame, the controller is adapted to process the received OAM frame and to determine a forwarding destination of the received OAM frame processed by referring to the multicast forwarding table (15) and, when the communication device functions as a termination point (40a-40c) for the received OAM frame, the controller is adapted to determine whether the received OAM frame is to be sent back.

5. The communication device according to any one of claims 1-4, wherein the controller is adapted to autonomously initiate a Layer-2 loopback test when receiving a multicast routing packet which is periodically exchanged between a router (30) and a terminal (10a-10b).

6. An operation management method in a communication device comprising:
providing a destination Media Access Control address into which an Internet Protocol multicast address is mapped, to an Operation Administration and Maintenance frame to be transmitted by extending a frame format of the OAM frame on a Layer-2 network (60); and
transmitting the OAM frame to the Layer-2 network.

7. The operation management method according to claim 6, further comprising;
constructing a multicast forwarding table (15) based on results of snooping Layer-3 routing packets;
when the communication device functions as a relay point (50a, 50b) for a received OAM frame, determining a forwarding destination of the received OAM frame to be transparently transmitted by referring to the multicast forwarding table (15); and
when the communication device functions as a termination point (40a-40c) for the received OAM frame, determining whether the received OAM frame is to be sent back.

8. The operation management method according to claim 7, further comprising:
when the communication device functions as a relay point (50a, 50b) for the received OAM frame, processing the received OAM frame and determining a forwarding destination of the received OAM frame processed by referring to the multicast forwarding table; and
when the communication device functions as a termination point (40a-40c) for the received OAM frame, determining whether the received OAM frame is to be sent back.

9. The operation management method according to claim 6, further comprising:
constructing a multicast forwarding table (15) based on results of snooping Layer-3 routing packets;
when the communication device functions as a relay point (50a, 50b) for the received OAM frame, processing the received OAM frame and determining a forwarding destination of the received OAM frame processed by referring to the multicast forwarding table; and
when the communication device functions as a termination point (40a-40c) for the received OAM frame, determining whether the received OAM frame is to be sent back.

10. The operation management method according to any one of claims 6-9, further comprising:
autonomously initiating a Layer-2 loopback test when receiving a multicast routing packet which is periodically exchanged between a router (30) and a terminal (10a-10c).

11. A system including a plurality of switch devices (41, 50a-50b, 40a-40c) of a Layer-2 network, each of the switch devices comprising:
a communication section for receiving or transmitting an Operation Administration and Maintenance frame from or to a Layer-2 network; and
**characterized by**:
a controller for providing a destination Media Access Control address into which an Internet Protocol multicast address is mapped, to the OAM frame by extending a frame format of the OAM frame when the OAM frame is transmitted in the Layer-2 network.

12. The system according to claim 11, wherein the switch device further comprises:
a multicast forwarding table (15) which is constructed based on results of snooping Layer-3 routing packets,
wherein, when the switch device functions as a relay point (50a, 50b) for a received OAM frame, the controller is adapted to determine a forwarding destination of the received OAM frame to be transparently transmitted by referring to the multicast forwarding table and, when the switch device functions as a termination point (40a-40c) for the received OAM frame, the controller is adapted to determine whether the received OAM frame is to be sent back.

13. The system according to claim 12, wherein, when the switch device functions as a relay point (50a, 50b) for the received OAM frame, the controller is adapted to process the received OAM frame and to determine a forwarding destination of the received OAM frame processed by referring to the multicast forwarding table and, when the switch device functions as a termination point (40a-40c) for the received OAM frame, the controller is adapted to determine whether the received OAM frame is to be sent back.

14. The system according to claim 11, wherein the switch device further comprises:
a multicast forwarding table (15) which is constructed based on results of snooping Layer-3 routing packets,
wherein, when the switch device functions as a relay point (50a, 50b) for the received OAM frame, the controller is adapted to process the received OAM frame and to determine a forwarding destination of the received OAM frame processed by referring to the multicast forwarding table and, when the switch device functions as a termination point (40a-40c) for the received OAM frame, the controller is adapted to determine whether the received OAM frame is to be sent back.

15. The system according to any one of claims 11 to 14, wherein the controller is adapted to autonomously initiate a Layer-2 loopback test when receiving a multicast routing packet which is periodically exchanged between a router (30) and a terminal (10a-10c).

## Patentansprüche

1. Kommunikationsgerät (1), umfassend:
einen Kommunikationsabschnitt (11a-11c) zum Empfangen oder zum Übertragen eines Frames für Betrieb, Administration und Wartung von oder an ein Layer-2-Netzwerk (60); und
**gekennzeichnet durch**:
einen Controller (12a-12c, 13a-13c, 17) zum Bereitstellen einer Ziel-Media-Acess-Control-Adresse, auf welche eine Internet-Protocol-Multicastadresse abgebildet ist, an das OAM-Frame **durch** Erweitern eines Frameformats des OAM-Frames, wenn das OAM-Frame in dem Layer-2-Netzwerk übertragen wird.

2. Kommunikationsgerät nach Anspruch 1, ferner umfassend:
eine Multicast-Weiterleitungstabelle (15), welche basierend auf Snooping-Ergebnissen von Layer-3-Routing-Paketen aufgebaut ist,
wobei, wenn das Kommunikationsgerät als ein Relaypunkt (50a, 50b) für ein empfangenes OAM-Frame tätig ist, der Controller dazu ausgelegt ist, ein Weiterleitungsziel des empfangenen, transparent zu übertragenden OAM-Frames durch Bezugnahme auf die Multicast-Weiterleitungstabelle (15) zu bestimmen, und, wenn das Kommunikationsgerät als Endpunkt (40a-40c) für das empfangene OAM-Frame tätig ist, der Controller dazu ausgelegt ist, zu bestimmen, ob das empfangene OAM-Frame zurück zu senden ist.

3. Kommunikationsgerät nach Anspruch 2, wobei, wenn das Kommunikationsgerät als ein Relaypunkt (50a, 50b) für das empfangene OAM-Frame tätig ist, der Controller dazu ausgelegt ist, das empfangene OAM-Frame zu verarbeiten und ein Weiterleitungsziel des empfangenen, verarbeiteten OAM-Frames durch Bezugnahme auf die Multicast-Weiterleitungstabelle (15) zu bestimmen, und, wenn das Kommunikationsgerät als ein Endpunkt (40a-40c) für das empfangene OAM-Frame tätig ist, der Controller dazu ausgelegt ist, zu bestimmen, ob das empfangene OAM-Frame zurück zu senden ist.

4. Kommunikationsgerät nach Anspruch 1, ferner umfassend:
eine Multicast-Weiterleitungstabelle (15), welche basierend auf Snooping-Ergebnissen von Layer-3-Routing-Paketen aufgebaut ist,
wobei, wenn das Kommunikationsgerät als ein Relaypunkt (50a, 50b) für das empfangene OAM-Frame tätig ist, der Controller dazu ausgelegt ist, das empfangene OAM-Frame zu verarbeiten und ein Weiterleitungsziel des empfangenen, verarbeiteten OAM-Frames durch Bezugnahme auf die Multicast-Weiterleitungstabelle (15) zu bestimmen, und, wenn das Kommunikationsgerät als ein Endpunkt (40a-40c) für das empfangene OAM-Frame tätig ist, der Controller dazu ausgelegt ist, zu bestimmen, ob das empfangene OAM-Frame zurück zu senden ist.

5. Kommunikationsgerät nach einem der Ansprüche 1 bis 4, wobei der Controller dazu ausgelegt ist, autonom einen Layer-2-Loopback-Test anzustoßen, wenn ein Multicast-Routing-Paket empfangen wird, welches zwischen einem Router (30) und einem Terminal (10a-10b) periodisch ausgetauscht ist.

6. Betriebsverwaltungsverfahren in einem Kommunikationsgerät, umfassend:
Bereitstellen einer Ziel-Media-Access-Control-Adresse, auf welche eine Internet-Protocol-Multicastadresse abgebildet wird, an ein auf einem Layer-2-Netzwerk (60) zu übertragendes Frame für Betrieb, Administration und Wartung durch Erweitern eines Frameformats des OAM-Frames; und
Übertragen des OAM-Frames auf dem Layer-2-Netzwerk.

7. Betriebsverwaltungsverfahren nach Anspruch 6, ferner umfassend:
Aufbauen einer Multicast-Weiterleitungstabelle (15) basierend auf Snooping-Ergebnissen von Layer-3-Routing-Paketen;
wenn das Kommunikationsgerät als ein Relaypunkt (50a, 50b) für ein empfangenes OAM-Frame tätig wird, Bestimmen eines Weiterleitungsziels des empfangenen, transparent zu übertragenden OAM-Frames durch Bezugnahme auf die Multicast-Weiterleitungstabelle (15); und
wenn das Kommunikationsgerät als ein Endpunkt (40a-40c) für das empfangene OAM-Frame tätig wird, Bestimmen, ob das empfangene OAM-Frame zurück zu senden ist.

8. Betriebsverwaltungsverfahren nach Anspruch 7, ferner umfassend:
wenn das Kommunikationsgerät als ein Relaypunkt (50a, 50b) für das empfangene OAM-Frame tätig wird, Verarbeiten des empfangenen OAM-Frames und Bestimmen eines Weiterleitungsziels des empfangenen, verarbeiteten OAM-Frames durch Bezugnahme auf die Multicast-Weiterleitungstabelle; und
wenn das Kommunikationsgerät als ein Endpunkt (40a-40c) für das empfangene OAM-Frame tätig wird, Bestimmen, ob das empfangene OAM-Frame zurück zu senden ist.

9. BetriebsverwaltungsverFahren nach Anspruch 6, ferner umfassend:
Aufbauen einer Multicast-Weiterleitungstabelle (15) basierend auf Snooping-Ergebnissen von Layer-3-Routing-Paketen;
wenn das Kommunikationsgerät als ein Relaypunkt (50a, 50b) für das empfangene OAM-Frame tätig wird, Verarbeiten des empfangenen OAM-Frame und Bestimmen eines Weiterleitungsziels des empfangenen, verarbeiteten OAM-Frame durch Bezugnahme auf die Multicast-Weiterleitungstabelle; und
wenn das Kommunikationsgerät als ein Endpunkt (40a-40c) für das empfangene OAM-Frame tätig wird, Bestimmen, ob das empfangene OAM-Frame zurück zu senden ist.

10. Betriebsverwaltungsverfahren nach einem der Ansprüche 6 bis 9, ferner umfassend:
autonomes Anstoßen eines Layer-2-Loopback-Tests, wenn ein Multicast-Routing-Paket empfangen wird, welches zwischen einem Router (30) und einem Terminal (10a-10c) periodisch ausgetauscht wird.

11. System, enthaltend eine Mehrzahl von Schaltgeräten (41, 50a-50b, 40a-40c) eines Layer-2-Netzwerkes, wobei jedes von den Schaltgeräten umfasst:
einen Kommunikationsabschnitt zum Empfangen oder zum Übertragen eines Frames für Betrieb, Administration und Wartung von oder an ein Layer-2-Netzwerk; und
**gekennzeichnet durch**:
einen Controller zum Bereitstellen einer Ziel-Media-Access-Control-Adresse, auf welche eine Internet-Protocol-Multicastadresse abgebildet ist, an das OAM-Frame **durch** Erweitern eines Frameformats des OAM-Frames, wenn das OAM-Frame in dem Layer-2-Netzwerk übertragen wird.

12. System nach Anspruch 11, wobei das Schaltgerät ferner umfasst:
eine Multicast-Weiterleitungstabelle (15), welche basierend auf Snooping-Ergebnissen von Layer-3-Routing-Paketen aufgebaut ist,
wobei, wenn das Schaltgerät als ein Relaypunkt (50a, 50b) für ein empfangenes OAM-Frame tätig ist, der Controller dazu ausgelegt ist, ein Weiterleitungsziel des empfangenen, transparent zu übertragenden OAM-Frames durch Bezugnahme auf die Multicast-Weiterleitungstabelle zu bestimmen, und, wenn das Schaltgerät als ein Endpunkt (40a-40c) für das empfangene OAM-Frame tätig ist, der Controller dazu ausgelegt ist, zu bestimmen, ob das empfangene OAM-Frame zurück zu senden ist.

13. System nach Anspruch 12, wobei, wenn das Schaltgerät als ein Relaypunkt (50a, 50b) für das empfangene OAM-Frame tätig ist, der Controller dazu ausgelegt ist, das empfangene OAM-Frame zu verarbeiten und ein Weiterleitungsziel des empfangenen, verarbeiteten OAM-Frames durch Bezugnahme auf die Multicast-Weiterleitungstabelle zu bestimmen, und, wenn das Schaltgerät als ein Endpunkt (40a-40c) für das empfangene OAM-Frame tätig ist, der Controller dazu ausgelegt ist, zu bestimmen, ob das empfangene OAM-Frame zurück zu senden ist.

14. System nach Anspruch 11, wobei das Schaltgerät ferner umfasst, eine Multicast-Weiterleitungstabelle (15), welche basierend auf Snooping-Ergebnissen von Layer-3-Routing-Paketen aufgebaut ist,
wobei, wenn das Schaltgerät als ein Relaypunkt (50a, 50b) für das empfangene OAM-Frame tätig ist, der Controller dazu ausgelegt ist, das empfangene OAM-Frame zu verarbeiten und ein Weiterleitungsziel für das empfangene, verarbeitete OAM-Frame durch Bezugnahme auf die Multicast-Weiterleitungstabelle zu bestimmen, und, wenn das Schaltgerät als ein Endpunkt (40a-40c) für das empfangene OAM-Frame tätig ist, der Controller dazu ausgelegt ist, zu bestimmen, ob das empfangene OAM-Frame zurück zu senden ist.

15. System nach einem der Ansprüche 11 bis 14, wobei der Controller dazu ausgelegt ist, autonom einen Layer-2-Loopback-Test anzustoßen, wenn ein Multicast-Routing-Paket empfangen wird, welches zwischen einem Router (30) und einem Terminal (10a-10c) periodisch ausgetauscht ist.

## Revendications

1. Dispositif de communication (1) comprenant :
une section de communication (11a à 11c) pour recevoir ou émettre une trame d'opérations, administration et maintenance (OAM) à partir de ou à un réseau de niveau 2 (60) ; et
**caractérisé par** :
une unité de commande (12a à 12c, 13a à 13c, 17) pour fournir une adresse de commande d'accès au support de destination dans laquelle une adresse multidiffusion de protocole Internet est cartographiée, à la trame OAM en étendant un format de trame sur la trame OAM lorsque la trame OAM est émise dans le réseau de niveau 2.

2. Dispositif de communication selon la revendication 1, comprenant en outre :
une table de réacheminement multidiffusion (15) qui est construite d'après les résultats de la surveillance de trafic de paquets de routage de niveau 3,
dans lequel, lorsque le dispositif de communication fonctionne comme un point de relais (50a, 50b) pour une trame OAM reçue, l'unité de commande est adaptée pour déterminer une destination de réacheminement de la trame OAM reçue à émettre de façon transparente en se référant à la table de réacheminement multidiffusion (15) et, lorsque le dispositif de communication fonctionne comme un point de terminaison (40a à 40c) pour la trame OAM reçue, l'unité de commande est adaptée pour déterminer si la trame OAM reçue doit être renvoyée.

3. Dispositif de communication selon la revendication 2, dans lequel, lorsque le dispositif de communication fonctionne comme un point de relais (50a, 50b) pour la trame OAM reçue, l'unité de commande est adaptée pour traiter la trame OAM reçue et pour déterminer une destination de réacheminement de la trame OAM reçue traitée en se référant à la table de réacheminement multidiffusion (15) et, lorsque le dispositif de communication fonctionne comme un point de terminaison (40a à 40c) pour la trame OAM reçue, l'unité de commande est adaptée pour déterminer si la trame OAM reçue doit être renvoyée.

4. Dispositif de communication selon la revendication 1, comprenant en outre :
une table de réacheminement multidiffusion (15) qui est construite d'après les résultats de la surveillance de trafic de paquets de routage de niveau 3,
dans lequel, lorsque le dispositif de communication fonctionne comme un point de relais (50a, 50b) pour la trame OAM reçue, l'unité de commande est adaptée pour traiter la trame OAM reçue et pour déterminer une destination de réacheminement de la trame OAM reçue traitée en se référant à la table de réacheminement multidiffusion (15) et, lorsque le dispositif de communication fonctionne comme un point de terminaison (40a à 40c) pour la trame OAM reçue, l'unité de commande est adaptée pour déterminer si la trame OAM reçue doit être renvoyée.

5. Dispositif de communication selon l'une quelconque des revendications 1 à 4, dans lequel l'unité de commande est adaptée pour initier de façon autonome un essai en boucle de niveau 2 lors de la réception d'un paquet de routage multidiffusion qui est périodiquement échangé entre un routeur (30) et un terminal (10a, 10b).

6. Procédé de gestion d'opérations dans un dispositif de communication comprenant les étapes consistant à :
fournir une adresse de commande d'accès à un support de destination dans laquelle une adresse multidiffusion de protocole Internet est cartographiée, à une trame d'opérations, administration et maintenance (OAM) à émettre par extension d'un format de trame de la trame OAM sur un réseau de niveau 2 (60) ; et
émettre la trame OAM vers le réseau de niveau 2.

7. Procédé de gestion d'opérations selon la revendication 6, comprenant en outre les étapes consistant à :
construire une table de réacheminement multidiffusion (15) d'après les résultats de la surveillance de trafic de paquets de routage de niveau 3 ;
lorsque le dispositif de communication fonctionne comme un point de relais (50a, 50b) pour une trame OAM reçue, déterminer une destination de réacheminement de la trame OAM reçue à émettre de façon transparente en se référant à la table de réacheminement multidiffusion (15) ; et
lorsque le dispositif de communication fonctionne comme un point de terminaison (40a à 40c) pour la trame OAM reçue, déterminer si la trame OAM reçue doit être renvoyée.

8. Procédé de gestion d'opérations selon la revendication 7, comprenant en outre les étapes consistant à ;
lorsque le dispositif de communication fonctionne comme un point de relais (50a, 50b) pour la trame OAM reçue, traiter la trame OAM reçue et déterminer une destination de réacheminement de la trame OAM reçue traitée en se référant à la table de réacheminement multidiffusion ; et
lorsque le dispositif de communication fonctionne comme un point de terminaison (40a à 40c) pour la trame OAM reçue, déterminer si la trame OAM reçue doit être renvoyée.

9. Procédé de gestion d'opérations selon la revendication 6, comprenant en outre les étapes consistant à :
construire une table de réacheminement multidiffusion (15) d'après les résultats de la surveillance de trafic de paquets de routage de niveau 3 ;
lorsque le dispositif de communication fonctionne comme un point de relais (50a, 50b) pour la trame OAM reçue, traiter la trame OAM reçue et déterminer une destination de réacheminement de la trame OAM reçue traitée en se référant à la table de réacheminement multidiffusion ; et
lorsque le dispositif de communication fonctionne comme un point de terminaison (40a à 40c) pour la trame OAM reçue, déterminer si la trame OAM reçue doit être renvoyée.

10. Procédé de gestion d'opérations selon l'une quelconque des revendications 6 à 9, comprenant en outre l'étape consistant à :
initier de façon autonome un essai en boucle de niveau 2 lors de la réception d'un paquet de routage multidiffusion qui est périodiquement échangé entre un routeur (30) et un terminal (10a à 10c) .

11. Système comportant une pluralité de dispositifs commutateurs (41, 50a à 50c, 40a à 40c) d'un réseau de niveau 2, chacun des dispositifs commutateurs comprenant :
une section de communication pour recevoir ou émettre une trame d'opérations, administration et maintenance (OAM) à partir de ou à un réseau de niveau 2 ; et
**caractérisé par** :
une unité de commande pour fournir une adresse de commande d'accès au support de destination dans laquelle une adresse multidiffusion de protocole Internet est cartographiée, à la trame OAM en étendant un format de trame de la trame OAM lorsque la trame OAM est émise dans le réseau de niveau 2.

12. Système selon la revendication 11, dans lequel le dispositif commutateur comprend en outre :
une table de réacheminement multidiffusion (15) qui est construite d'après les résultats de la surveillance de trafic de paquets de routage de niveau 3,
où, lorsque le dispositif commutateur fonctionne comme un point de relais (50a, 50b) pour une trame OAM reçue, l'unité de commande est adaptée pour déterminer une destination de réacheminement de la trame OAM reçue pour être transmise de façon transparente en se référant à la table de réacheminement multidiffusion et, lorsque le dispositif de commutateur fonctionne comme un point de terminaison (40a à 40c) pour la trame OAM reçue, l'unité de commande est adaptée pour déterminer si la trame OAM reçue doit être renvoyée.

13. Système selon la revendication 12, dans lequel, lorsque le dispositif commutateur fonctionne comme un point de relais (50a, 50b) pour la trame OAM reçue, l'unité de commande est adaptée pour traiter la trame OAM reçue et pour déterminer une destination de réacheminement de la trame OAM reçue traitée en se référant à la table de réacheminement multidiffusion et, lorsque le dispositif commutateur fonctionne comme un point de terminaison (40a à 40c) pour la trame OAM reçue, l'unité de commande est adaptée pour déterminer si la trame OAM reçue doit être renvoyée.

14. Système selon la revendication 11, dans lequel le dispositif commutateur comprend en outre :
une table de réacheminement multidiffusion (15) qui est construite d'après les résultats de la surveillance de trafic de paquets de routage de niveau 3,
dans lequel, lorsque le dispositif commutateur fonctionne comme un point de relais (50a, 50b) pour la trame OHM reçue, l'unité de commande est adaptée pour traiter la trame OAM reçue et pour déterminer une destination de réacheminement de la trame OAM reçue traitée en se référant à la table de réacheminement multidiffusion et, lorsque le dispositif commutateur fonctionne comme un point de terminaison (40a à 40c) pour la trame OAM reçue, l'unité de commande est adaptée pour déterminer si la trame OAM reçue doit être renvoyée.

15. Système selon l'une quelconque des revendications 11 à 14, dans lequel l'unité de commande est adaptée pour initier de façon autonome un essai en boucle de niveau 2 lors de la réception d'un paquet de routage multidiffusion qui est périodiquement échangé entre un routeur (30) et un terminal (10a à 10c).
